# EUROPEAN PATENT APPLICATION

(11) **EP 2 541 991 A1**
(43) Date of publication of application: **02.01.2013**
(21) Application number: 11747515.2
(22) Date of filing: 25.02.2011
(51) Int. Cl.: H04W 48/18, H04W 36/16, H04W 84/10

(54) **MOBILE COMMUNICATION SYSTEM, NETWORK DEVICE, AND MOBILE COMMUNICATION METHOD**

(30) Priority: 26.02.2010 JP 2010043158
(71) Applicant: NTT DOCOMO, INC., Chiyoda-ku Tokyo 100-6150 (JP)
(72) Inventor: TSUNEDA, Takayuki, Tokyo 100-6150 (JP); HOSONO, Hiroyuki, Tokyo 100-6150 (JP); SATO, Takaaki, Tokyo 100-6150 (JP); TERAYAMA, Takeshi, Tokyo 100-6150 (JP); MASUDA, Masafumi, Tokyo 100-6150 (JP)
(74) Representative: HOFFMANN EITLE
(86) International application number: PCT/JP2011/054324
(87) International publication number: WO 2011/105559

(57) **Abstract**

A specific network apparatus 20 includes a collection unit 22 configured to collect neighboring base station information configured such that a neighboring public cell radio base station provided in the neighborhood of the specific cell is identifiable, and a communication unit 21 configured to notify a public cell network apparatus 30 of the neighboring base station information based on a re-establishment request message received via the specific cell from a UE10 whose access to the specific cell is restricted. The network apparatus 30 selects a reselection target public cell to be utilized by the UE10 among a plurality of public cells owned by the neighboring public cell radio base station.

## Description

### TECHNICAL FIELD

The present invention relates to a mobile communication system having a specific cell radio base station which has a specific cell configured to be settable with an access type, and multiple public cell radio base stations each of which has a public cell, and a network apparatus and a mobile communication method used in the mobile communication system.

### BACKGROUND ART

There has been known a specific cell referred to as a CSG (Closed Subscriber Group) cell, a home cell, a femtocell, or the like (e.g., NON-PATENT DOCUMENT 1). Note that an access type is settable in the specific cell. The access type is "Closed," "Hybrid," or "Open."

The "Closed" specific cell is configured to permit only a specific user (UE; User Equipment) to receive provision of services. The "Hybrid" specific cell is configured to permit a specific user to perform communications with a higher quality than other users (non-specific users). The "Open" specific cell is configured to permit all the users to receive provision of services, as is the case with a general public cell.

Here, the specific cell which is not permitted to provide services to a non-specific user (a mobile communication terminal) instructs a mobile communication terminal to disconnect a call by a re-establishment response message when having received a re-establishment request message from the non-specific user. Instead, the specific cell ignores the re-establishment request message from the non-specific user (the mobile communication terminal).

### PRIOR ART DOCUMENT

### NON-PATENT DOCUMENT

NON-PATENT DOCUMENT 1: 3GPP TS22.220 v.10.1.0

### SUMMARY OF THE INVENTION

Here, when a non-specific user (a mobile communication terminal) comes closer to a specific cell, the signal intensity from the specific cell increases. Thus, the non-specific user (the mobile communication terminal) may repeatedly transmit a re-establishment request message to the specific cell.

For example, when an upper limit is set for the number of transmitting the re-establishment request message, a call established by the non-specific user (the mobile communication terminal) is finally disconnected.

For this reason, the present invention has been made with a view to solving the above problem. Accordingly, an objective of the present invention is to provide a mobile communication system, a network apparatus, and a mobile communication method, which are capable of inhibiting the disconnection of the call established by a non-specific user (mobile communication terminal).

A mobile communication system according the first feature includes a specific cell radio base station which has a specific cell configured to be settable with an access type, and a public cell radio base station which has a public cell. The mobile communication system includes a collection unit configured to collect neighboring base station information configured such that a neighboring public cell radio base station provided in the neighborhood of the specific cell is identifiable, and a notification unit configured to notify a network apparatus managing the neighboring public cell radio base station of the neighboring base station information and a re-establishment request message received via the specific cell from a mobile communication terminal whose access to the specific cell is restricted. The network apparatus managing the neighboring public cell radio base station comprises a selection unit configured to select a reselection target public cell to be utilized by the mobile communication terminal among a plurality of public cells owned by the neighboring public cell radio base station.

In the first feature, the collection unit may instruct the specific cell radio base station to measure an electric field intensity of broadcast information transmitted from the public cell radio base station and acquires an electric field intensity measurement result configured such that the public cell radio base station is identifiable from the specific cell radio base station, and the collection unit may determine the neighboring public cell radio base station based on the electric field intensity measurement result.

In the first feature, the selection unit may select as a reselection target public cell a public cell that uses the smallest amount of resource among a plurality of the public cells owned by the neighboring public cell radio base station.

In the first feature, the selection unit may select a reselection target public cell at random among a plurality of the public cells owned by the neighboring public cell radio base station.

A network apparatus according the second feature is provided in a mobile communication system including a specific cell radio base station which has a specific cell configured to be settable with an access type, and a plurality of public cell radio base stations each of which has a public cell. The network apparatus includes a collection unit configured to collect neighboring base station information configured such that each neighboring public cell radio base station provided in the neighborhood of the specific cell is identifiable, and a notification unit configured to notify a network apparatus managing the neighboring public cell radio base stations of the neighboring base station information and notify the network apparatus managing the neighboring public cell radio base stations of a re-establishment request message received via the specific cell from a mobile communication terminal whose access to the specific cell is restricted.

A mobile communication method according the third feature is applied to a mobile communication system including a specific cell radio base station which has a specific cell configured to be settable with an access type, and a plurality of public cell radio base stations each of which has a public cell. The mobile communication method includes the steps of collecting neighboring base station information configured such that each neighboring public cell radio base station provided in the neighborhood of the specific cell is identifiable, notifying a network apparatus managing the neighboring public cell radio base stations of the neighboring base station information, notifying the network apparatus managing the neighboring public cell radio base stations of a re-establishment request message received via the specific cell from a mobile communication terminal whose access to the specific cell is restricted, and selecting a reselection target public cell to be utilized by the mobile communication terminal among the plurality of public cells owned by the neighboring public cell radio base stations, by the network apparatus managing the neighboring public cell radio base stations based on the neighboring base station information.

A mobile communication system according the fourth feature includes a specific cell radio base station, which has a specific cell configured to be settable with an access type, and a public cell radio base station which has a public cell. The mobile communication system includes a receiver unit configured to receive a re-establishment request message via the specific cell from a mobile communication terminal whose access to the specific cell is restricted, and an instruction unit configured to instruct the specific cell radio base station to reduce transmission power for the specific cell in response to the re-establishment request message.

A network apparatus according the fifth feature is provided in a mobile communication system including a specific cell radio base station which has a specific cell configured to be settable with an access type, and a public cell radio base station which has a public cell. The network apparatus includes a receiver unit configured to receive a re-establishment request message via the specific cell from a mobile communication terminal whose access to the specific cell is restricted, and an instruction unit configured to instruct the specific cell radio base station to reduce transmission power for the specific cell in response to the re-establishment request message.

A mobile communication method according the sixth feature is applied to a mobile communication system including a specific cell radio base station which has a specific cell configured to be settable with an access type, and a public cell radio base station which has a public cell, the mobile communication method including the steps of receiving a re-establishment request message via the specific cell from a mobile communication terminal whose access to the specific cell is restricted, and instructing the specific cell radio base station to reduce transmission power for the specific cell in response to the re-establishment request message.

### BRIEF DESCRIPTION OF DRAWINGS

[Fig. 1] Fig. 1 is a drawing showing a mobile communication system 100 according to a first embodiment.
[Fig. 2] Fig. 2 is a drawing showing a specific cell network apparatus 20 according to the first embodiment.
[Fig. 3] Fig. 3 is a drawing showing a public cell network apparatus 30 according to the first embodiment.
[Fig. 4] Fig. 4 is a sequence diagram showing an operation of the mobile communication system 100 according to the first embodiment.
[Fig. 5] Fig. 5 is a flowchart showing an operation of the specific cell network apparatus 20 according to the first embodiment.
[Fig. 6] Fig. 6 is a flowchart showing an operation of the specific cell network apparatus 20 according to the first embodiment.
[Fig. 7] Fig. 7 is a flowchart showing an operation of the public cell network apparatus 30 according to the first embodiment.
[Fig. 8] Fig. 8 is a drawing showing a specific cell network apparatus 40 according to a second embodiment.
[Fig. 9] Fig. 9 is a flowchart showing an operation of the specific cell network apparatus 40 according to the second embodiment.
[Fig. 10] Fig. 10 is a drawing showing a mobile communication system 100 according to Modification 1.

### MODES FOR CARRYING OUT THE INVENTION

A mobile communication system according to an embodiment of the present invention is described below by referring to the drawings. In the following description of the drawings, same or similar reference numerals are given to denote same or similar portions.

Moreover, the drawings are schematic ones and proportions of sizes and the like are different from actual ones. Thus, specific sizes and the like should be judged by referring to the description below. In addition, the drawings naturally include portions where relationships or percentages of sizes are different among the drawings.

### [Summary of Embodiment]

Firstly, a mobile communication system according to an embodiment includes a specific cell radio base station which has a specific cell configured to be settable with an access type and multiple public cell radio base stations each of which has a public cell. The mobile communication system includes a collection unit configured to collect neighboring base station information configured such that each neighboring public cell radio base station provided in the neighborhood of a specific cell is identifiable, and a notification unit configured to notify a network apparatus managing the neighboring public cell radio base stations of the neighboring base station information and notify the network apparatus managing the neighboring public cell radio base stations of a re-establishment request message received via the specific cell from the mobile communication terminal whose access to the specific cell is restricted. The network apparatus managing the neighboring public cell radio base stations has a selection unit configured to select a reselection target public cell to be utilized by the mobile communication terminal among the plurality of public cells owned by the neighboring public cell radio base stations.

In the embodiment, the collection unit is configured to collect the neighborhood base station information configured such that each neighboring public cell radio base station provided in the neighborhood of the specific cell is identifiable. The network apparatus managing the neighboring public cell radio base stations selects a reselection target cell to be utilized by the mobile communication terminal based on the neighboring base station information.

Accordingly, when the mobile communication terminal (the non-specific user) whose access to the specific cell is restricted cannot stay in stand-by or continue communication due to the interference from the specific cell, a proper reselection target public cell is selected in response to the re-establishment request message. The disconnection of the call established by the mobile communication terminal (the non-specific user) can be inhibited.

In other words, the network apparatus managing the neighboring public cell radio base stations can identify the neighboring public cell radio base stations provided in the neighborhood of the specific cell and can identify the specific cells owned by the neighboring public cell radio base stations. Accordingly, a reselection target public cell can be selected among the public cells usable by the mobile communication terminal (the non-specific user).

Secondly, a mobile communication system according to an embodiment includes a specific cell radio base station which has a specific cell configured to be settable with an access type and a public cell radio base station which has a public cell. The mobile communication system includes a receiver unit configured to receive a re-establishment request message via the specific cell from the mobile communication terminal whose access to the specific cell is restricted, and an instruction unit configured to instruct the specific cell radio base station to reduce the transmission power for the specific cell in response to the re-establishment request message.

In the embodiment, the instruction unit instructs the specific cell radio base station to reduce the transmission power for the specific cell in response to the re-establishment request message.

In other words, when the mobile communication terminal (the non-specific user) whose access to the specific cell is restricted cannot stay in stand-by or continue communication due to the interference from the specific cell, the interference from the specific cell is reduced in response to the re-establishment request message. Accordingly, the disconnection of the call established by the mobile communication terminal (the non-specific user) can be inhibited.

### [First Embodiment]

### (Configuration of Mobile Communication System)

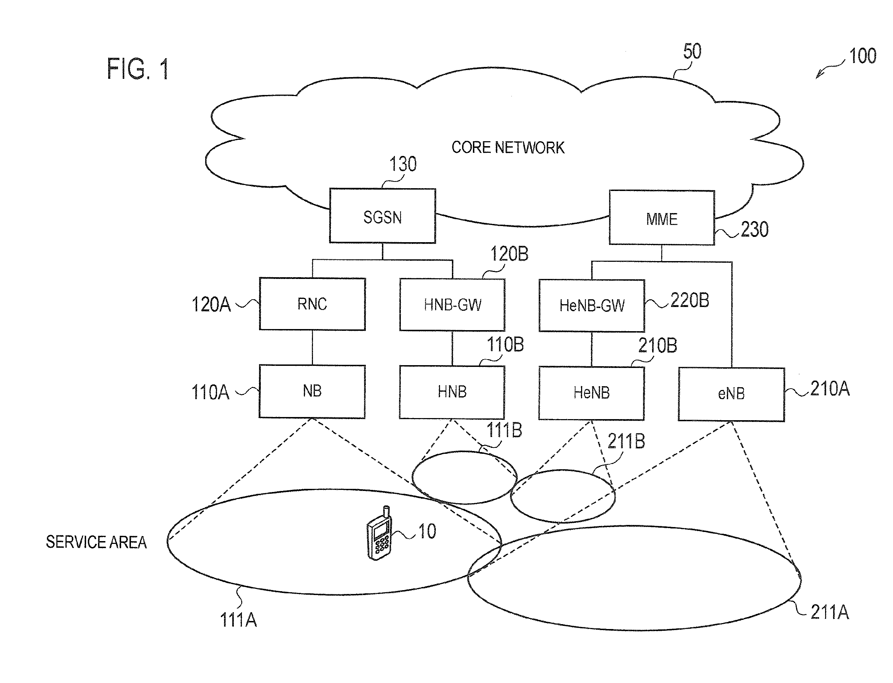

The configuration of a mobile communication system according to a first embodiment is described below by referring to the drawings. Fig. 1 is a drawing showing a mobile communication system 100 according to the first embodiment.

As shown in Fig. 1, the mobile communication system 100 includes a communication terminal device 10 (hereinafter, UE 10) and a core network 50. In addition, the mobile communication system 100 includes a first communication system and a second communication system.

For example, the first communication system 100 is a communication system supporting UMTS (Universal Mobile Telecommunication System) . The first communication system has a base station 110A (hereinafter NB 110A), a home base station 110B (hereinafter, HNB 110B), a RNC 120A, a home base station gateway 120B (hereinafter, HNB-GW 120B), and an SGSN 130.

Note that a radio access network (UTRAN; Universal Terrestrial Radio Access Network) supporting the first communication system includes the NB 110A, HNB 110B, RNC 120A, and HNB-GW 120B.

For example, the second communication system is a communication system supporting LTE (Long Term Evolution). The second communication system has, for example, a base station 210A (hereinafter, eNB 210A), a home base station 210B (hereinafter, HeNB 2108), a home base station gateway 220B (hereinafter, HeNB-GW 220B), and an MME 230.

Note that a radio access network (E-UTRAN; Evolved Universal Terrestrial Radio Access Network) supporting the second communication system includes the eNB 210A, HeNB 210B, and HeNB-GW 220B.

The UE 10 is a device (User Equipment) configured to perform communications with the first communication system or the second communication system. For example, the UE 10 has a function to perform radio communications with the NB 110A and the HNB 110B . Instead, the UE 10 has a function to perform radio communications with the eNB 210A and the HeNB 210B.

The NB 110A is a device (NodeB) having a public cell 111A and configured to perform radio communications with the UE 10 present in the public cell 111A..

The HNB 110B is a device (Home NodeB) having a specific cell 111B and configured to perform radio communications with the UE 10 present in the specific cell 111B.

The RNC 120A is a device (Radio Network Controller) connected with the NB 110A and configured to establish a radio connection (RRC Connection) with the UE 10 present in the public cell 111A.

The HNB-GW 120B is a device (Home NodeB Gateway) connected with the HNB 110B and configured to establish a radio connection (RRC Connection) with the UE 10 present in the specific cell 111B.

The SGSN 130 is a device (Serving GPRS Support Node) configured to exchange packets in a packet exchange domain. The SGSN 130 is provided in the core network 50. Although omitted in Fig. 1, a device (MSC; Mobile Switching Center) to perform circuit switching in a circuit switching domain may be provided in the core network 50.

The eNB 210A is a device (evolved NodeB) having a public cell 211A and configured to perform radio communications with the UE 10 present in the public cell 211A.

The HeNB 210B is a device (Home evolved NodeB) having a specific cell 211B and configured to perform radio communications with the UE 10 present in the specific cell 211B.

The HeNB-G6V 220B is a device (Home evolved NodeB Gateway) connected with the HeNB 210B and configured to manage the HeNB 210B.

The MME 230 is a device (Mobility Management Entity) connected with the eNB 210A and configured to manage mobility of the UE 10 establishing the radio connection with the eNB 210A. Also, the MME 230 is a device connected with the HeNB 210B via the HeNB-GW 220B and configured to manage the mobility of the UE 10 establishing the radio connection with the HeNB 210B.

Note that the public cell and the specific cell should be understood as functions to perform radio communications with the UE 10. However, the public cell and the specific cell are also used as terms to express a service area of a cell. Also, a cell such as a public cell or a specific cell is identified by a frequency, diffusion code, or time slot, which is used in a cell.

The specific cell is sometimes referred to as a femtocell, CSG (Closed Subscriber Group), or a home cell. Also, the specific cell is configured so that an access type can be set for defining UEs 10 allowed to access the specific cell. The access type is "Closed," "Hybrid," or "Open".

The "Closed" specific cell is configured to permit only a specific user (UE; User Equipment) managed by the specific cell to receive provision of services.

The "Hybrid" specific cell is configured to permit a specific user managed by the specific cell to perform communications with a high quality and is configured to permit a non-specific user not managed by the specific cell to perform communications with a best effort quality.

The "Open" specific cell is configured to permit all the UEs 10 to receive provision of services, as is the case with the public cell. Here, in the "Open" cell, UEs 10 can perform communications with equal quality without being distinguished as to whether the UEs 10 are managed by the specific cell.

Note that the access type may be an "ACCESS CLASS BARRED" to prohibit an access of the UE 10 by each access class, or a "CELL BARRED" to prohibit an access of the UE 10 by each cell.

### (Configuration of Network Apparatus for Specific Cell)

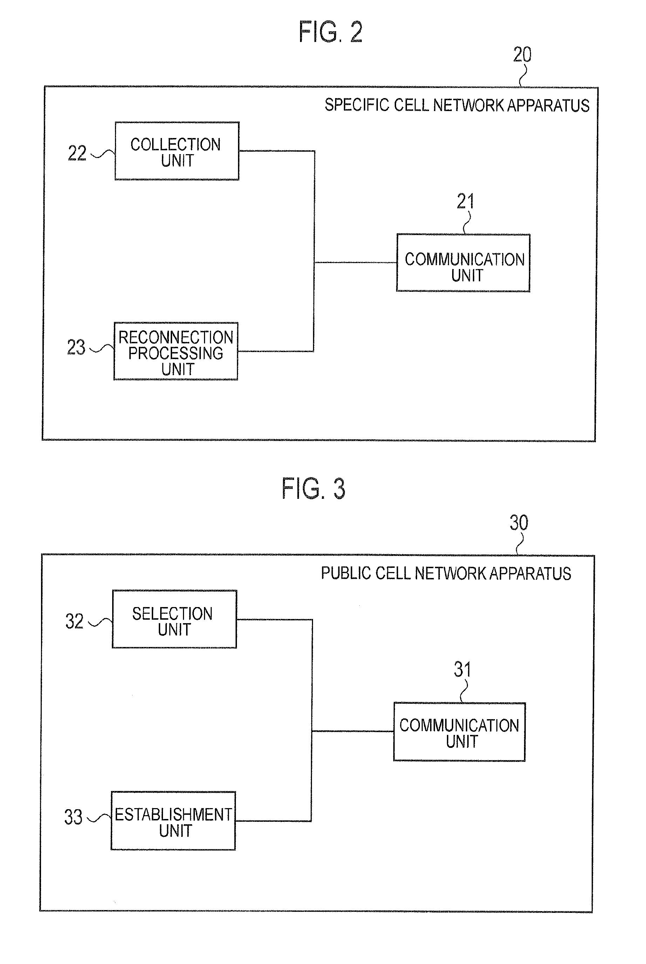

The configuration of a specific cell network apparatus according to the first embodiment is described below by referring to the drawings. Fig. 2 is a drawing showing a specific cell network apparatus 20 according to the first embodiment. As shown in Fig. 2, the specific cell network apparatus 20 has a communication unit 21, a collection unit 22, and a reconnection processing unit 23.

Note that the specific cell network apparatus 20 may be a specific cell network apparatus 20 (e.g. , HNB 110B, HeNB 210B) which has a specific cell. Instead, the specific cell network apparatus 20 may be a device (e.g., HNB-GW 120B, SGSN 130, HeNB-GW 220B, MME 230) which is provided in an upper level of the specific cell radio base station.

The communication unit 21 performs communications with the UE 10. Also, the communication unit 21 performs communications with other network apparatus. Instead, the communication unit 21 performs communications with a specific cell radio base station (e.g., HNB 110B, HeNB 210B) which is provided under the control of the specific cell network apparatus 20.

For example, the communication unit 21 receives a re-establishment request message, which is made due to interference from a specific cell, via the specific cell from the UE 10 (non-specific user) whose access to the specific cell is restricted.

Here, when the UE 10 (non-specific user) comes closer to the specific cell, the interference from the specific cell so increases that the UE 10 cannot stay in stand-by or continue communication. On the other hand, the electric field intensity (received intensity) of broadcast information or the like (e.g., a pilot channel) broadcasted from the specific cell is large. Accordingly, the UE 10 (non-specific user) transmits the re-establishment request message via the specific cell.

Instead, the communication unit 21 notifies the specific cell radio base station of measurement instruction information instructing measurement of the electric field intensity (received intensity) of the broadcast information (e.g., a pilot channel) transmitted from a public cell. From the specific cell radio base station, the communication unit 21 receives an electric field intensity measurement result containing the electric field intensity (received intensity) of the broadcast information broadcasted from the public cell.

Note that the specific cell radio base station, which is instructed by the specific cell network apparatus 20 to measure the electric field intensity (received intensity) of the broadcast information, searches for the broadcast information while switching the multiple frequencies from one to another. With this, the specific cell radio base station can identify the information (e.g., a correspondence relationship between the frequency and the electric field intensity (received intensity)) of each of public cells provided in the neighborhood of the specific cell. The specific cell radio base station transmits the information (e.g., the correspondence relationship between the frequency and the electric field intensity (received intensity)) of the public cell provided in the neighborhood of the specific cell to the specific cell network apparatus 20 as the electric field intensity measurement result.

Instead, the communication unit 21 notifies a public cell network apparatus 30 to be described later of a re-establishment request message received from the UE 10 (the non-specific user) . In the present embodiment, the communication unit 21 configures a notification unit. The communication unit 21 receives a re-establishment response message in response to the re-establishment request message received from the UE 10 (the non-specific user) from the public cell network apparatus 30 to be described later. The communication unit 21 notifies the UE 10 (the non specific user) of the re-establishment response message.

Alternatively, the communication unit 21 may notify the public cell network apparatus 30 to be described later of neighborhood base station information collected by the collection unit 22. Note that the communication unit 21 may notify the neighborhood base station information together with the re-establishment request message. Instead, the communication unit 21 may notify the neighborhood base station information separately from the re-establishment request message.

The collection unit 22 collects the neighborhood base station information configured such that each of neighboring public cell radio base stations provided in the neighborhood of the specific cell is identifiable.

Note that the neighborhood base station information may be an identifier to identify the neighboring public cell radio base station. Instead, the neighboring base station information may be a frequency configuration used in the public cell provided in the neighborhood of the specific cell.

Specifically, firstly, the collection unit 22 instructs the specific cell radio base station to measure the electric field intensity (the received intensity) of the broadcast information (e.g., a pilot channel) transmitted from the public cell radio base station. Specifically, the collection unit 22 instructs the communication unit 21 to transmit measurement instruction information.

Secondly, the collection unit 22 determines the neighboring public cell radio base station provided in the neighborhood of the specific cell based on the electric field intensity measurement result received from the specific cell radio base station. Specifically, the collection unit 22 determines, as a neighboring radio base station radio base station, the public cell radio base station that has a public cell whose electric field intensity (received intensity) is the largest. However, it is not necessary that the neighboring public cell radio base station is one public cell radio base station. In other words, the collection unit 22 may selecting multiple public cells in ascending order of the electric field intensity (received intensity) and thereby determine multiple public cell radio base stations having the selected public cells as neighboring public cell radio base stations.

The reconnection processing unit 23 processes the re-establishment request message received from the UE 10 (the non-specific user). Specifically, the reconnection processing unit 23 instructs the communication unit 21 to notify a re-establishment request message received from the UE 10 (the non-specific user). As described above, the re-establishment request message is notified to the public cell network apparatus 30 to be described later.

Note that the reconnection processing unit 23 may add the neighboring base station information, which is configured such that the identification of each neighboring public cell radio base station is identifiable, to the re-establishment request message. However, the neighboring base station information may be notified to the public cell network apparatus 30 to be described later in advance.

Also, the reconnection processing unit 23 instructs the communication unit 21 to notify a re-establishment response message in response to the re-establishment request message received from the UE 10 (the non-specific user). As described above, the re-establishment response message is transmitted to the UE 10 (the non-specific user).

Here, the re-establishment response message contains reselection target information (e.g., a frequency, code, or the like) identifying a handover target public cell to be utilized by the UE 10 (the non-specific user).

### (Configuration of Network Apparatus for Public Cell)

The configuration of a public cell network apparatus according to the first embodiment is described below by referring to the drawings. Fig. 3 is a drawing showing the public cell network apparatus 30 according to the first embodiment. As shown in Fig. 3, the public cell network apparatus 30 has a communication unit 31, a selection unit 32, and an establishment unit 33.

Note that the public cell network apparatus 30 may be a public cell radio base station (e.g., NB 110A, eNB 210A) which has a public cell. Instead, the public cell network apparatus 30 may be a device (e.g., RNC 120A, SGSN 130, MME 230) provided in an upper level of the public cell radio base station.

Here, illustrated is a case where the public cell network apparatus 30 is a device managing a neighboring public cell radio base station. The neighboring public cell radio base station may be the same as the current public cell radio base station, which has a public cell being utilized by the UE 10 (the non-specific user) or may be different from the current public cell radio base station.

The communication unit 31 performs communications with other network apparatuses. Instead, the communication unit 31 performs communications with a public cell radio base station (e.g., NB 110A, eNB 210A) which is provided under the control of the public cell network apparatus 30.

For example, the communication unit 31 receives neighboring base station information from the specific cell network apparatus 20. Instead, the communication unit 31 receives a re-establishment request message received from the UE 10 (the non-specific user) from the specific cell network apparatus 20. As described above, the neighboring base station information may be added to the re-establishment request message. The communication unit 31 notifies the specific cell network apparatus 20 of a re-establishment response message in response to the re-establishment request message received from the UE 10 (the non-specific user).

Instead, the communication unit 31 may notify the public cell radio base station of information for requesting information on a public cell (a frequency used in the public cell) owned by the public cell radio base station. The communication unit 31 may receive information on a public cell (a frequency used in the public cell) owned by the public cell radio base station from the public cell radio base station.

The selection unit 32 selects a reselection target public cell to be utilized by the UE 10 (the non-specific user). Specifically, the selection unit 32 may select a reselection target public cell to be utilized by the UE 10 from the multiple public cells owned by the neighboring public cell radio base stations based on the neighboring base station information. Specifically, the selection unit 32 identifies the neighboring public cell radio base stations usable by the UE 10 (the non-specific user) and identifies the public cells owned by the neighboring public cell radio base stations. Subsequently, the selection unit 32 selects a reselection target public cell by from the identified public cells excluding the public cell using the frequency utilized by the UE 10 (the non-specific user).

Instead, when the public cell network apparatus 30 manages cell configuration information indicating the configuration of the public cells provided under the control of the public cell network apparatus 30 itself, the selection unit 32 may select a reselection target public cell to be utilized by the UE 10 based on the cell configuration information without using the neighboring base station information. Specifically, the selection unit 32 selects a reselection target public cell from the public cells which are shown by the cell configuration information and exclude the public cell using the frequency utilized by the UE 10 (non-specific user). For example, the selection unit 32 selects the reselection target public cell using the cell configuration information when the neighboring base station information cannot be obtained in advance.

Here, it is preferable that the selection unit 32 select as a reselection target public cell a public cell using the smallest amount of resources (e.g., the number of UEs 10 in stand-by or in communication) among the identified public cells excluding the public cell using the frequency utilized by the UE 10 (the non-specific user) . Instead, the selection unit 32 may select a reselection target public cell at random among the identified public cells excluding the public cell using the frequency used by the UE 10 (the non-specific user).

Note that the selection unit 32 may select a resource (such as a code) of a channel to be established in the reselection target public cell.

The selection unit 32 instructs the communication unit 31 to notify the re-establishment response message to which the reselection target information is added in such a manner that the reselection target information (e.g., a frequency, code, or the like) identifying the reselection target public cell is added to the re-establishment response message. As described above, the re-establishment response message to which the reselection target information is added is notified to the specific cell network apparatus 20.

The establishment unit 33 establishes a channel with a public cell radio base station, which has the reselection target public cell selected by the selection unit 32.

### (Operation of Mobile Communication System)

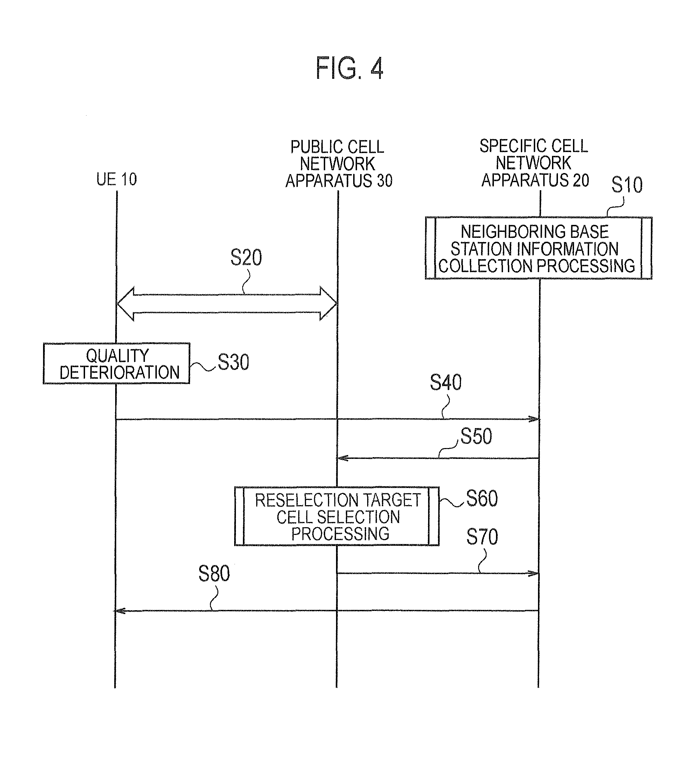

An operation of the mobile communication system according to the first embodiment is described below by referring to the drawings. Fig. 4 is a sequence diagram showing an operation of the mobile communication system 100 according to the first embodiment.

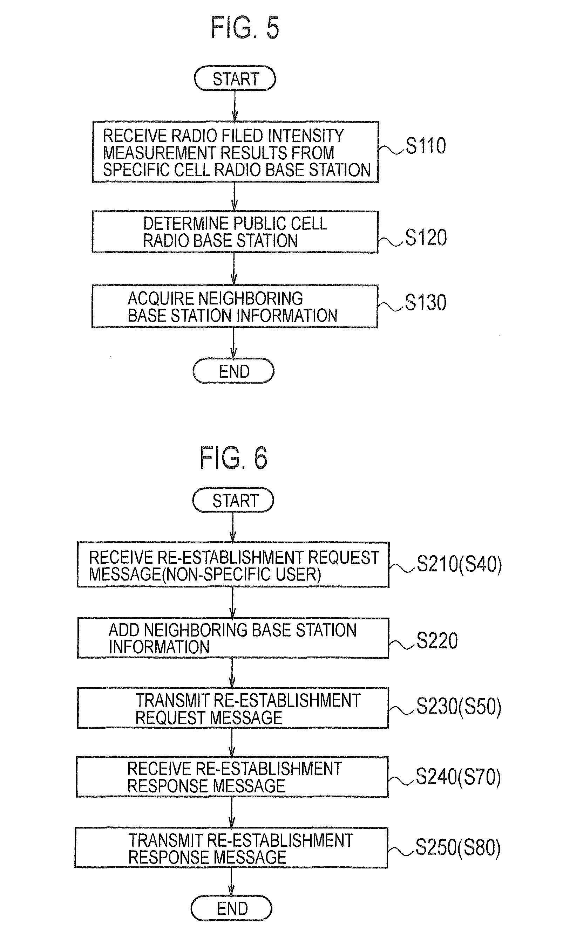

As shown in Fig. 4, at Step 10, the specific cell network apparatus 20 collects neighboring base station information configured such that each neighboring public cell radio base station provided in the neighborhood of a specific cell is identifiable. Note that the details of Step 10 are described later (see Fig. 5).

At Step 20, the user 10 (the non-specific user) performs communications with a public cell provided under the control of the public cell network apparatus 30.

At Step 30, a quality (such as SIR: Signal to Interference Ratio) of a signal received from the public cell by the UE 10 (the non-specific user) is deteriorated. Here, the UE 10 (the non-specific user) comes closer to the specific cell to increase the interference from the specific cell, which results in deterioration in the quality. For example, the synchronization of the UE 10 (the non-specific user) with the public cell is gone out along with the increase of the interference from the specific cell.

At Step 40, the UE 10 (the non-specific user) transmits the re-establishment request message to the specific cell network apparatus 20 via the specific cell.

At Step 50, the specific cell network apparatus 20 notifies the public cell network apparatus 30 of the re-establishment request message. Note that the specific cell network apparatus 20 may add the neighboring base station information to the re-establishment request message. Illustrated below is a case where the neighboring base station information is added to the re-establishment request message.

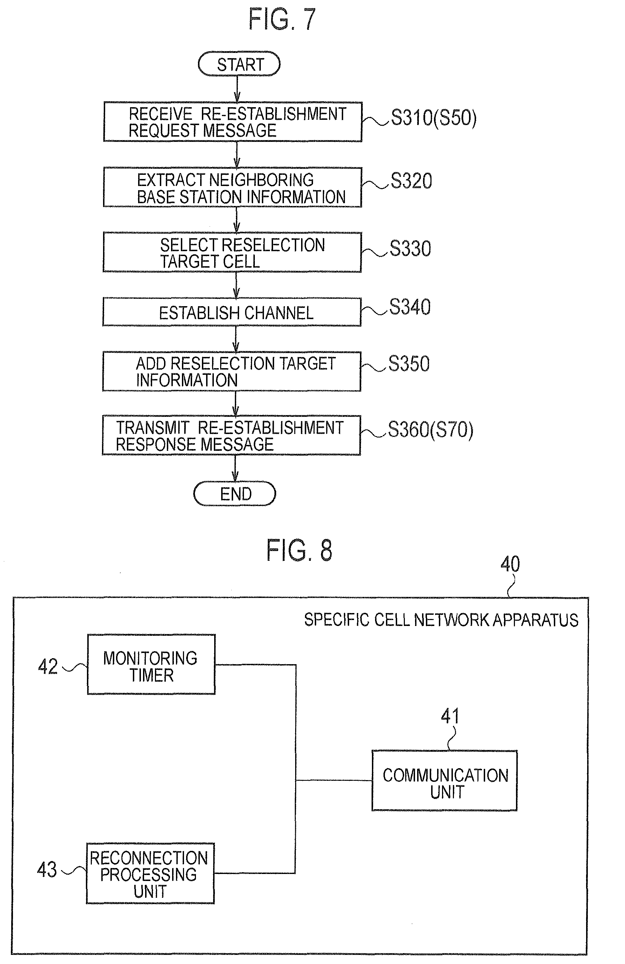

At Step 60, the public cell network apparatus 30 selects a reselection target public cell based on the neighboring base station information. Note that the details of Step 60 are described later (see, Fig. 7).

At Step 70, the public cell network apparatus 30 notifies the specific cell network apparatus 20 of the re-establishment response message to which the reselection target information (e.g., a frequency, code, or the like) identifying the reselection target public cell is added.

At Step 80, the specific cell network apparatus 20 transmits the re-establishment response message to which the reselection target information is added to the UE 10 (the non-specific user) via the specific cell.

### (Operation of Network Apparatus for Specific Cell)

An operation of the specific cell network apparatus according to the first embodiment is described below by referring to the drawings. Figs. 5 and 6 are flowcharts, each showing an operation of the specific cell network apparatus 20 according to the first embodiment.

Firstly, the details of the above-described Step 10 are described by referring to Fig. 5. As shown in Fig. 5, at Step 110, the specific cell network apparatus 20 instructs the specific cell radio base station to measure the electric field intensity (received intensity) of broadcast information (e.g., a pilot channel) transmitted from the public cell radio base station. Also, the specific cell network apparatus 20 receives an electric field intensity measurement result from the specific cell radio base station.

At Step 120, the specific cell network apparatus 20 determines the neighboring public cell radio base station provided in the neighborhood of the specific cell based on the electric field intensity measurement result. For example, the specific cell network apparatus 20 determines the public cell radio base station whose electric field intensity measurement result is the largest as a neighboring public cell radio base station.

At Step 130, the specific cell network apparatus 20 acquires neighboring base station information configured such that the neighboring public cell radio base station is identifiable.

Secondly, transfer processing of the re-establishment request message is described by referring to Fig. 6. As shown in Fig. 6, at Step 210, the specific cell network apparatus 20 receives the re-establishment request message from the UE 10 (the non-specific user) via a specific cell (as is similar to Step 40).

At Step 220, the specific cell network apparatus 20 adds the neighboring base station information to the re-establishment request message.

At Step 230, the specific cell network apparatus 20 notifies the public cell network apparatus 30 of the re-establishment request message to which the neighboring base station information is added (as is similar to Step 50).

At Step 240, the specific cell network apparatus 20 receives the re-establishment response message to which information identifying the reselection target public cell is added from the public cell network apparatus 30 (as is similar to Step 70).

At Step 250, the specific cell network apparatus 20 transmits the re-establishment response message to which the information identifying the reselection target public cell is added to the UE 10 (non-specific user) via the specific cell.

### (Operation of Network Apparatus for Public Cell)

An operation of the public cell network apparatus 30 according to the first embodiment is described below by referring to the drawings. Fig. 7 is a flowchart showing an operation of the public cell network apparatus 30 according to the first embodiment. Specifically, the details of the above-described Step 60 are described.

As shown in Fig. 7, at Step 310, the public cell network apparatus 30 receives a re-establishment request message to which neighboring base station information is added from the specific cell network apparatus 20 (as is similar to Step 50).

At Step 320, the public cell network apparatus 30 extracts the neighboring base station information from the re-establishment request message.

At Step 330, the public cell network apparatus 30 selects a reselection target public cell to be utilized by the UE 10 (the non-specific user) based on the neighboring base station information. Specifically, the public cell network apparatus 30 identifies neighboring public cell radio base stations usable by the UE 10 (the non-specific user) and identifies public cells owned by the neighboring public cell radio base stations. Subsequently, the public cell network apparatus 30 selects a reselection target public cell from the identified public cells excluding the public cell using the frequency utilized by the UE 10 (the non-specific user).

At Step 340, the public cell network apparatus 30 establishes a channel with a public cell radio base station that has a reselection target public cell selected at Step 33.

At Step 350, the public cell network apparatus 30 adds the reselection target information (e.g., a frequency, code, or the like) identifying the reselection target public cell to the re-establishment response message.

At Step 360, the public cell network apparatus 30 notifies the specific cell network apparatus 20 of the re-establishment response message to which the reselection target information (e.g., a frequency, code, or the like) identifying the reselection target public cell is added (as is similar to Step 70) .

### (Advantageous Effects)

In the first embodiment, the specific cell network apparatus 20 collects neighboring base station information configured such that each neighboring public cell radio base station provided in the neighborhood of the specific cell is identifiable. The public cell network apparatus 30 selects a reselection target public cell to be utilized by the UE 10 based on the neighboring base station information.

Accordingly, when the UE 10 (the non-specific user) whose access to the specific cell is restricted cannot stay in stand-by or continue communication by the interference from the specific cell, a proper reselection target public cell is selected in response to the re-establishment request message. The disconnection of the call established by the UE 10 (the non-specific cell) can be inhibited.

In other words, the public cell network apparatus 30 can identify the neighboring public cell radio base stations provided in the neighborhood of the specific cell and can identify the public cells owned by the neighboring public cell radio base station. Accordingly, the public cell network apparatus 30 can select a reselection target public cell among the public cells usable by the mobile communication terminal (the non-specific user).

### [Second Embodiment]

A second embodiment is described below by referring to the drawings. In the following description, portions different from those of the first embodiment are mainly described.

Specifically, in the second embodiment, a specific cell network apparatus 20 instructs to reduce transmission power for a specific cell in response to a re-establishment request message received from a UE 10 (a non-specific user) whose access to the specific cell is restricted.

### (Configuration of Network Apparatus for Specific Cell)

The configuration of the specific cell network apparatus according to the second embodiment is described below by referring to the drawings. Fig. 8 is a drawing showing a specific cell network apparatus 40 according to the second embodiment. As shown in Fig. 8, the specific cell network apparatus 40 has a communication unit 41, a monitoring timer 42, and a reconnection processing unit 43.

The communication unit 41 performs communications with the UE 10. Also, the communication unit 41 performs communications with other network apparatuses. Instead, the communication unit 41 performs communications with a specific cell radio base station (e.g., HNB 110B, HeNB 210B) which is provided under the control of the specific cell network apparatus 20.

For example, the communication unit 41 receives a re-establishment request message due to interference from a specific cell via the specific cell from the UE 10 (the non-specific user) whose access to the specific cell is restricted. In the present embodiment, the communication unit 41 forms a receiver unit.

The monitoring timer 42 is a timer for monitoring an elapsed time after the issuance of an instruction to reduce transmission power for the specific cell. The monitoring timer 42 is set with a predetermined monitoring time and is configured to count down the time set in the monitoring timer 42. However, the monitoring timer 42 may be configured to count up the elapsed time after the issuance of the instruction to reduce the transmission power for the specific cell.

The reconnection processing unit 43 instructs the public cell radio base station having a specific cell to reduce the transmission power for the specific cell in response to the re-establishment request message received from the UE 10 (the non-specific user). In the present embodiment, the reconnection processing unit 43 configures an instruction unit. Also, the reconnection processing unit 43 sets a predetermined monitoring time in the monitoring timer 42 when the reduction in the transmission power for the specific cell is instructed.

Also, the reconnection processing unit 43 instructs the public cell radio base station, which has a specific cell, to cancel the reduction in the transmission power for the specific cell when the monitoring timer 42 expires.

### (Operation of Network Apparatus for Specific Cell)

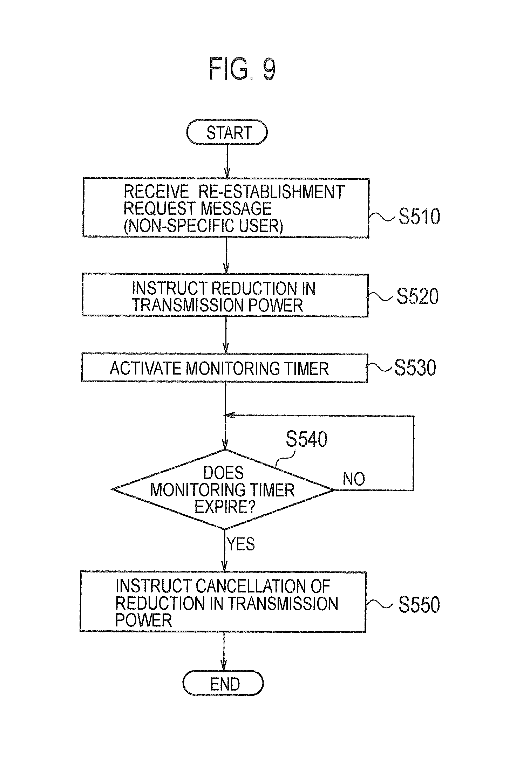

An operation of the specific cell network apparatus according to the second embodiment is described below by referring to the drawings. Fig. 9 is a flowchart showing an operation of the specific cell network apparatus 40 according to the second embodiment.

As shown in Fig. 9, at Step 510, the specific cell network apparatus 40 receives a re-establishment request message from the UE 10 (the non-specific user) via a specific cell.

At Step 520, the specific cell network apparatus 40 instructs the public cell radio base station, which has a specific cell, to reduce the transmission power for the specific cell.

At Step 530, the specific cell network apparatus 40 activates the monitoring timer 42. Specifically, the specific cell network apparatus 40 sets a predetermined monitoring time in the monitoring timer 42.

At Step 540, the specific cell network apparatus 40 determines if the monitoring timer 42 expires. When the monitoring timer 42 expires, the specific cell network apparatus 40 proceeds to processing at Step 550. When the monitoring timer 42 does not expire, the specific cell network apparatus 40 awaits until the monitoring timer 42 expires.

At Step 550, the specific cell network apparatus 40 instructs the public cell radio base station, which has the specific cell, to cancel the reduction in the transmission power for the specific cell.

### (Advantageous Effects)

In the second embodiment, the specific cell network apparatus 40 instructs the specific cell radio base station to reduce the transmission power for the specific cell in response to the re-establishment request message.

In other words, when the UE 10 (the non-specific user) whose access to the specific cell is restricted cannot stay in stand-by or continue communication due to the interference from the specific cell, the interference from the specific cell is reduce in response to the re-establishment request message. Accordingly, the disconnection of the call established by the UE 10 (the non-specific user) can be inhibited.

### [Modification 1]

Modification 1 of the first embodiment and second embodiment is described below by referring to the drawings. In the following description, portions different from those of the first embodiment and the second embodiment are mainly described.

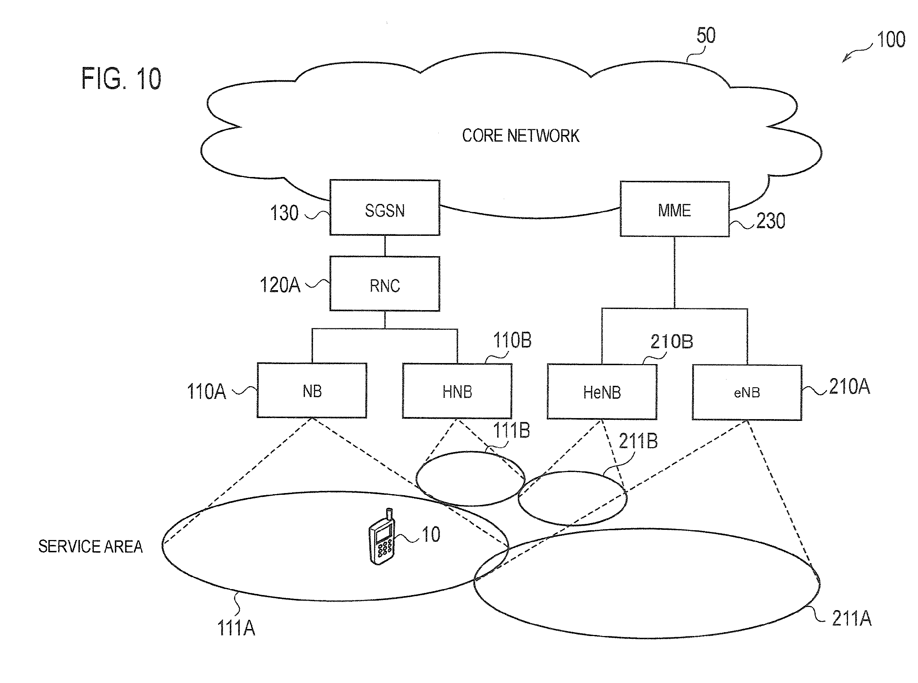

Specifically, in the first embodiment and the second embodiment, an upper node of the HNB 110B is an HNB-GW 120B. On the other hand, in Modification 1, as shown in Fig. 10, an upper node of an HNB 110B is a RNC 120A.

In Modification 1, the RNC 120A manages the HNB 110B in place of the HNB-GW 120B. In other words, the RNC 120A provides functions similar to those of the HNB-GW 120B to devices residing under the control of the RNC 120A.

In addition, in the first embodiment and the second embodiment, an upper node of the HeNB 210B is a HeNB-GW 220B. On the other hand, in Modification 1, as shown in Fig. 10, an upper node of the HeNB 210B is an MME 230.

In Modification 1, the HeNB 210B provides functions similar to those of the HeNB-GW 220B to a devices residing under the control of the HeNB 210B in place of the HeNB-GW 220B.

Note that only the HBN-GB 120B may be omitted or only the HeNB-GW 220B may be omitted.

### [Other Embodiments]

The present invention has been described by using the above-described embodiments. However, it should not be understood that the description and the drawings, which constitute one part of this disclosure, are to limit the present invention. Various alternative embodiments, examples, and operational techniques will be obvious for those who are in the art from this disclosure.

In the above-described embodiment, illustrated is the case where communications can be performed between the specific cell network apparatus 20 and the public cell network apparatus 30. However, there may be a case where communications cannot be performed between the specific cell network apparatus 20 and the public cell network apparatus 30. For example, that is the case where a carrier managing the specific cell network apparatus 20 differs from a carrier managing the public cell network apparatus 30. In such a case, the specific cell network apparatus 20 may instruct the UE 10 to use a frequency other than the frequency being used by the UE 10. For example, the specific cell network apparatus 20 may instruct the UE 10 to use a frequency other than the frequency being used by the UE 10 with releasing RRC connection.

In the above-described embodiment, the specific cell network apparatus 20 notifies the public cell network apparatus 30 of neighboring base station information configured such that each neighboring public cell radio base station identifiable. However, the embodiment is not limited to that configuration. For example, the specific cell network apparatus 20 may make an inquiry to each neighboring public cell radio base station about the public cell owned by the neighboring public cell radio base station. In other words, the specific cell network apparatus 20 may receive information (public cell information) indicating the public cell owned by the neighboring public cell radio base station from the neighboring public cell radio base station. The specific cell network apparatus 20 notifies the neighboring public cell radio base station of the public cell information.

In the above-described embodiment, illustrated is the case where the configuration (the communication unit 21, the collection unit 22, and the reconnection processing unit 23) provided in the specific cell network apparatus 20 is provided in one apparatus. However, the embodiment is not limited to that configuration. In other words, the communication unit 21, the collection unit 22, and the reconnection processing unit 23 may be provided in different apparatuses, respectively.

In the above-described embodiment, illustrated is the case where the configuration (the communication unit 31, the selection unit 32, and the establishment unit 33) provided in the public cell network apparatus 30 is provided in one apparatus. However, the embodiment is not limited to that configuration. In other words, the communication unit 31, the selection unit 32, and the establishment unit 33 may be provided in different apparatuses, respectively.

In the above-described embodiment, illustrated is the case where the configuration (the communication unit 41, the monitoring timer 42, and the reconnection processing unit 43) provided in the specific cell network apparatus 40 is provided in one apparatus. However, the embodiment is not limited to that configuration. In other words, the communication unit 41, the monitoring timer 42, and the reconnection processing unit 43 may be provided in different apparatuses, respectively.

Control signals such as RANAP (Radio Access Network Application Part), NBAP (Node B Application Part), RNSAP (Radio Network Subsystem Application Part), and HNBAP (Home Node B Application Part) are used in communications between respective apparatuses.

Note that the operation of the specific cell network apparatus 20, the public cell network apparatus 30, or the specific cell network apparatus 40 may be implemented by hardware, or may be implemented by a software module executed by a processor, or may be implemented by the combination of the both.

The software module may be provided in any form of a recording medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

Such recording medium is connected with a processor so that the processor can read and write information on the recording medium. Also, such recording medium may be integrated on the processor. Instead, such recording medium and the processor may be provided inside ASIC. Such ASIC may be provided in the specific cell network apparatus 20, the public cell network apparatus 30 or the specific cell network apparatus 40. Also, such recording medium and processor may be provided in the specific cell network apparatus 20, the public cell network apparatus 30 or the specific cell network apparatus 40 as a discrete component.

Note that the contents of Japanese Patent Application Publication No. 2010-043158 (filed on February 26, 2010) are hereby incorporated by reference in their entirety.

### INDUSTRIAL APPLICABILITY

The present invention can provide a mobile communication system, a network apparatus, and a mobile communication method, which are capable of inhibiting disconnection of a call established by a non-specific user (mobile communication terminal). Thus, the present invention is useful in a radio communication and the like.

### EXPLANATION OF THE REFERENCE NUMERALS

10... communication terminal device, 20... specific cell network apparatus, 21... communication unit, 22... collection unit, 23... reconnection processing unit, 30... public cell network apparatus, 31... communication unit, 32... selection unit, 33... establishment unit, 40... specific cell network apparatus, 41... communication unit, 42... monitoring timer, 43... reconnection processing unit, 50... core network, 100... mobile communication system, 110A... NB, 110B... HNB, 111A... public cell, 111B... specific cell, 120A... RNC, 120B... HNB-GW, 130... SGSN, 210A... eNB, 210B... HeNB, 211A... public cell, 211B... specific cell, 220B... HeNB-GW, 230... MME

## Claims

1. A mobile communication system including a specific cell radio base station which has a specific cell configured to be settable with an access type, and a public cell radio base station which has a public cell, the mobile communication system comprising:
a collection unit configured to collect neighboring base station information configured such that a neighboring public cell radio base station provided in the neighborhood of the specific cell is identifiable; and
a notification unit configured to notify a network apparatus managing the neighboring public cell radio base station of the neighboring base station information and a re-establishment request message received via the specific cell from a mobile communication terminal whose access to the specific cell is restricted, wherein
the network apparatus managing the neighboring public cell radio base station comprises a selection unit configured to select a reselection target public cell to be utilized by the mobile communication terminal among a plurality of public cells owned by the neighboring public cell radio base station.

2. The mobile communication system according to claim 1, wherein the collection unit instructs the specific cell radio base station to measure an electric field intensity of broadcast information transmitted from the public cell radio base station and acquires an electric field intensity measurement result configured such that the public cell radio base station is identifiable from the specific cell radio base station, and
the collection unit determines the neighboring public cell radio base station based on the electric field intensity measurement result.

3. The mobile communication system according to claim 1, wherein the selection unit selects as a reselection target public cell a public cell that uses the smallest amount of resource among a plurality of the public cells owned by the neighboring public cell radio base station.

4. The mobile communication system according to claim 1, wherein the selection unit selects a reselection target public cell at random among a plurality of the public cells owned by the neighboring public cell radio base station.

5. A network apparatus provided in a mobile communication system including a specific cell radio base station which has a specific cell configured to be settable with an access type, and a plurality of public cell radio base stations each of which has a public cell, the network apparatus comprising:
a collection unit configured to collect neighboring base station information configured such that each neighboring public cell radio base station provided in the neighborhood of the specific cell is identifiable; and
a notification unit configured to notify a network apparatus managing the neighboring public cell radio base stations of the neighboring base station information and notify the network apparatus managing the neighboring public cell radio base stations of a re-establishment request message received via the specific cell from a mobile communication terminal whose access to the specific cell is restricted.

6. A mobile communication method applied to a mobile communication system including a specific cell radio base station which has a specific cell configured to be settable with an access type, and a plurality of public cell radio base stations each of which has a public cell, the mobile communication method comprising the steps of:
collecting neighboring base station information configured such that each neighboring public cell radio base station provided in the neighborhood of the specific cell is identifiable;
notifying a network apparatus managing the neighboring public cell radio base stations of the neighboring base station information;
notifying the network apparatus managing the neighboring public cell radio base stations of a re-establishment request message received via the specific cell from a mobile communication terminal whose access to the specific cell is restricted; and
selecting a reselection target public cell to be utilized by the mobile communication terminal among the plurality of public cells owned by the neighboring public cell radio base stations, by the network apparatus managing the neighboring public cell radio base stations based on the neighboring base station information.

7. A mobile communication system including a specific cell radio base station, which has a specific cell configured to be settable with an access type, and a public cell radio base station which has a public cell, the mobile communication system comprising:
a receiver unit configured to receive a re-establishment request message via the specific cell from a mobile communication terminal whose access to the specific cell is restricted; and
an instruction unit configured to instruct the specific cell radio base station to reduce transmission power for the specific cell in response to the re-establishment request message.

8. A network apparatus provided in a mobile communication system including a specific cell radio base station which has a specific cell configured to be settable with an access type, and a public cell radio base station which has a public cell, the network apparatus comprising:
a receiver unit configured to receive a re-establishment request message via the specific cell from a mobile communication terminal whose access to the specific cell is restricted; and
an instruction unit configured to instruct the specific cell radio base station to reduce transmission power for the specific cell in response to the re-establishment request message.

9. A mobile communication method applied to a mobile communication system including a specific cell radio base station which has a specific cell configured to be settable with an access type, and a public cell radio base station which has a public cell, the mobile communication method comprising the steps of:
receiving a re-establishment request message via the specific cell from a mobile communication terminal whose access to the specific cell is restricted; and
instructing the specific cell radio base station to reduce transmission power for the specific cell in response to the re-establishment request message.
